# EUROPEAN PATENT APPLICATION

(11) **EP 4 763 391 A1**
(43) Date of publication of application: **24.06.2026**
(21) Application number: 24222694.2
(22) Date of filing: 21.12.2024
(51) Int. Cl.: B23D 45/06, B23D 45/00, B23D 47/04, B23D 45/10

(54) **AN APPARATUS FOR CUTTING LAY-FLAT BOOK BLOCKS**

(71) Applicant: BOOKS FACTORY Spolka z ograniczona odpowiedzialnoscia, 71-004 Szczecin (PL)
(72) Inventor: KRZANOWSKI, Daniel, 71-043 Szczecin (PL)
(74) Representative: Wroblewski, Marcin Jan

(57) **Abstract**

The object of the invention is an apparatus for cutting lay-flat book blocks. Lay-flat books are composed of signatures in a form of single-folded sheets that form adjacent pages. The single-folded sheets form four-page signatures, which are glued together with the entire faces of the sheets, and the sum of the spines of the signatures forms the spine of the book. The apparatus for cutting lay-flat book blocks comprises a cutting unit (3) with a circular saw (4), and is characterised in that the cutting unit (3) comprises at least one longitudinal guide (5) and at least one saw assembly (6). The single saw assembly (6) has a driven slider (7) slidably mounted on a longitudinal guide (5), which is adapted to a reciprocating movement along this longitudinal guide (5) and has the loading grippers (8), the circular saw (4), the unloading grippers (9) fixed in sequence. The longitudinal guide (5) has an attached support table (14) containing a slot for the circular saw (4) and adapted to support the book blocks (1) being cut. The loading grippers (8) and the unloading grippers (9) are fixed vertically in a direction perpendicular to the plane of the support table (14).

## Description

The object of the invention is an apparatus for producing lay-flat books finding application in bookbinding work carried out on an industrial scale for cutting the interconnected signatures forming lay-flat book blocks. Books of this type are also referred to as board books.

A characteristic feature of lay-flat books is their excellent openability, whereby when a book of this type is opened, the two centre pages are always visible, with each pair of pages visible in their entirety, and there is no crease lying some distance from the spine of the book on the pages. When unfolded, the adjacent pages of this type of book form a flat surface. Books aimed at young children are the most common example of this type of book, but photo albums and product catalogues are also common in this form. These types of books are often produced from signatures in square format or album format. Books designed for young children have thick pages, much less likely to be damaged than the typical sheets of paper used in books.

Lay-flat books are composed of signatures in a form of single-folded sheets that form adjacent pages. The single-folded sheets form four-page signatures, which are glued together with the entire faces of the sheets, and the sum of the spines of the folds forms the spine of the book. The individual sheets are printed on one surface only and the other, unprinted surface is glued to the subsequent sheets. A single page of such a book is made up of two sheets of paper glued together, and often has an additional stiffening layer glued in. In this type of book, the entire surface of the individual sheets is often printed so that there are no margins.

In the state of the art, the method of manufacturing such books is disclosed by GB2591219A. In this method, the book is made from multiple signatures - sheets of paper, each printed on one side and folded in half so that the two inner pages are printed and the two outer pages are blank. One of the blank outer sides of the first signature is glued to one of the blank outer sides of the second signature, and the remaining blank outer side of the second signature is glued to the blank outer side of the third signature. Gluing by the method described is continued until all the signatures are glued together, forming a block in which every page, except the first and last, is double thickness. The first and last pages are then usually glued to a separate cover. There is a fold in the middle of a book produced in this way and, when opened, there is no break or intersection between the adjacent pages because the adjacent pages are formed by a single sheet of paper that has been folded in half. Such a book opens completely flat and does not have a central recess like a conventional book. In this method, several pages of the future book in format 100 mm x 100 mm are printed on a single sheet of paper, later forming a signature, one page above the other, and then the signatures are glued together. When the sheets are glued together, the result is a block of sheets of paper containing several connected books. The sheet block is then cut to separate the sheet block into individual books. Advantageously, the block of paper sheets is pressed before the cutting operation. Optionally, sheets of stiffening material such as cardboard or fibreboard are inserted between the sheets of paper on the outside of the signatures. Following this method avoids the need to handle small sheets of paper and uses large sheets of paper during the steps of applying glue to the folds and folding the signatures into a block. Cutting a block of sheets of paper also increases the efficiency of lay-flat book production.

When it comes to cutting a block of glued together signatures, the use of typical equipment used in industrial bookbinding finds difficulties. The cutting of the block of glued together signatures is carried out transversely to the spine, and the signatures forming the block must not move transversely during cutting. A block of glued together signatures is not susceptible to the deformation that occurs when cutting on knife-equipped paper cutters. The cutting knife, which has a wedge-shaped cross-section, acts on the block of glued together folds perpendicular to the direction of the spine. Since the signatures in the block are glued together with their entire surfaces, and cannot move relative to each other, the knife crushes them and damages one of the semi-finished products on the knife's face side. The risk of damage to the signatures is significant, especially as the cut signatures, which are glued together with entire surfaces of sheets, often of high rigidity and thickness, which are all the more likely not to give way and move each other as the knife plunges into the material being cut. It is extremely difficult, when splitting a block of signatures glued together with whole sheets, to obtain two parts of the split material that will be subject to further bookbinding processing and to eliminate the risk of one of these parts becoming waste as a result of the cutting process.

In industrial bookbinding, in addition to cutting with cutters, circular saw cutting is also known to be used in automated binding lines to separate book blocks initially manufactured together.

The purpose of the invention is to solve the technical problem of the lack of adaptation of known means to carry out the cutting process in industrial bookbinding for the production of lay-flat books, constructed in such a way that the book block is formed by signatures glued together with whole sheet surfaces.

### The essence of the invention

The object of the invention is an apparatus for cutting lay-flat book blocks, comprising a cutting unit with a circular saw. The essence of the invention is that the cutting unit comprises at least one longitudinal guide and at least one saw assembly, whereby the single saw assembly has a driven slider slidably mounted on the longitudinal guide and adapted for reciprocating movement along said longitudinal guide and has loading grippers, a circular saw, unloading grippers, fixed in sequence, wherein the longitudinal guide has a support table comprising a slot for the circular saw and adapted to support the book blocks being cut, wherein the loading grippers and the unloading grippers are slidably fixed in a vertical direction perpendicular to the plane of the support table.

Advantageously, the single saw assembly comprises a pair of loading grippers and a pair of unloading grippers, the loading grippers in the pair of loading grippers and the unloading grippers in the pair of unloading grippers being arranged on both sides of the circular saw.

It is preferable that the apparatus for cutting lay-flat book blocks comprises at least two saw assemblies, the first saw assembly having a pair of loading grippers and a pair of unloading grippers, the loading grippers in the pair of loading grippers and the unloading grippers in the pair of unloading grippers being arranged on both sides of the circular saw, and each subsequent saw assembly has single loading grippers and single unloading grippers arranged on the selected side of the circular saw.

It is also reasonable for the longitudinal guides are slidably mounted on transverse guides oriented perpendicular to these longitudinal guides and are provided with a drive implementing a reciprocating movement of the longitudinal guides along the transverse guides.

It is advisable that the support tables have a fixed position along the length of the longitudinal guides.

It is equally advantageous if the apparatus for cutting lay-flat book blocks comprises at least two longitudinal guides with support tables, and between the support tables a support structure adapted to support the book blocks being cut is mounted.

It is also appropriate if the support structure is made of flat bars fixed to the support tables.

In particular, it is advantageous if the lay-flat book block cutting machine comprises pressure beams adapted to press the book blocks being cut against the support tables during the cutting operation.

It is also a good idea if a single loading gripper or unloading gripper has a vertical bracket acting as a retaining element.

### Advantages of this solution

The main advantage of the invention arises from the use of a cutting unit containing at least one saw assembly for cutting lay-flat book blocks. The circular saw used in the cutting unit allows easy and precise cutting of book blocks made up of signatures glued together across the entire surface. The cut carried out by the circular saw allows a block of glued together signatures containing several pieces, i.e. two pieces for double production, three pieces for triple production, etc., being cut into individual books. Cutting carried out with a circular saw does not cause damage to the resulting book blocks - semi-finished products. The use of a saw assembly to cut blocks of signatures glued together enables double, triple, etc. production. A book block containing several pieces is dissected into full-fledged semi-finished products corresponding to the number of pieces. Such a possibility is not offered by other cutting apparatuses, in particular those implementing wedge-shaped knife cutting.

Other advantages, in turn, are related to the cutting carried out using a cutting unit comprising a slider with loading grippers, a circular saw and unloading grippers attached.

The saw assembly is then realised as a single kinematic chain, resulting in significant efficiency and cost savings by allowing the slider and connected components to be driven by a single motor. During one complete movement cycle of this saw assembly, several operations are carried out simultaneously:
- positioning of the book blocks made of the glued signatures prior to loading into the cutting unit, in particular by using a pair of loading grippers having an integrated retaining element to fix the position of the stack of book blocks;
- gripping the book blocks with loading grippers and loading them into position for cutting;
- simultaneously with the loading of the book blocks, unloading the individual book blocks previously cut and pushing them outside the cutting unit onto the output conveyor;
- cutting with a circular saw of a book block in the cutting position with simultaneous movement of a pair of loading grippers to the loading position of the next book block and a pair of unloading grippers to the unloading position of the individual book blocks from the book block being cut.

Furthermore, the construction of the cutting unit with longitudinal guides moving along the transverse guides ensures that the saw assembly can be adjusted in between cutting the successive book blocks arriving at the cutting unit. Adjustment of the saw assembly is necessary when changing the number of pieces in the width of a book block, requiring the introduction of another saw assembly. On the other hand, adjustment of the saw assembly by changing its position in relation to the axis of the incoming book blocks, i.e. changing its position in the transverse direction, is necessary when changing the format of the book blocks or when changing the number of books in the incoming block. Adjusting the position of the sawing unit accordingly and adapting it, for example to a changed book format, does not require stopping the process and can be done automatically rather than manually. This solution enables non-stop production without the loss of productivity and waste paper associated with the need of adjustment during downtime, which is a drawback of many state-of-the-art solutions.

The invention is illustrated in embodiments and a drawing, which shows at:
fig. 1 - in perspective view, a schematic of a book block with marked cut lines forming two individual book blocks after cutting,
fig. 2 - in perspective view, a schematic of the book block with marked cut lines forming three individual book blocks after cutting,
fig. 3 - in perspective view, the cutting apparatus in the book block retrieval position,
fig. 4 - in perspective view, the cutting apparatus during transport of the book block to the cutting position,
fig. 5 - in perspective view, the cutting apparatus in the position immediately before starting to cut the book block,
fig. 6 - in perspective view, the cutting apparatus in the book block cutting position.

### Detailed description of the invention

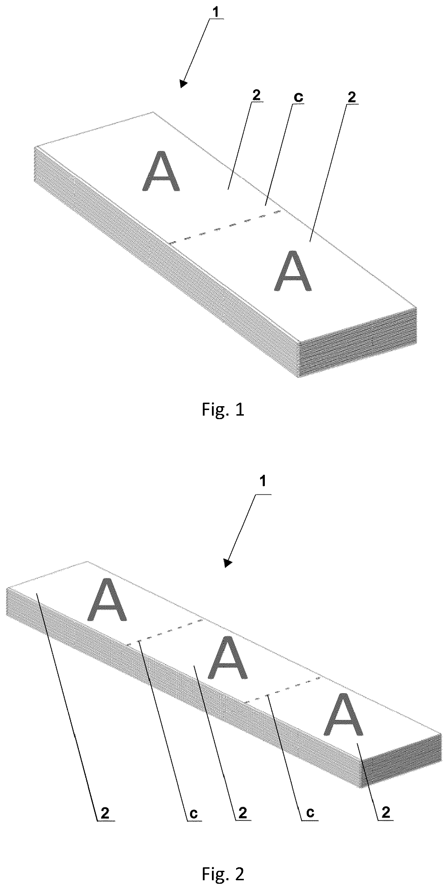

An apparatus for cutting is designed for cutting book blocks 1 lay-flat books, also referred to as board books. Lay-flat books are composed of signatures in a form of single-folded sheets that form adjacent pages. The single-folded sheets form four-page signatures, which are glued together with the entire faces of the sheets, and the sum of the spines of the signatures forms the spine of the book. When printing on a single sheet, many of the same book pages are printed, so that the later book block, when cut up, forms individual book blocks made up of signatures glued together. For example, a book block 1 of ten signatures can be cut transversely according to the cutting line C into two individual book blocks 2 (fig. 1), or into three individual book blocks 2 (fig. 2). As a general rule, the smaller the format of the target book, the book block will be cut into the more individual book blocks.

The apparatus for cutting cooperates with typical conveyors used in printing and industrial bookbinding lines and, in particular, with the input conveyor feeding the book blocks 1 to the apparatus for cutting and the output conveyor receiving the cut, individual book blocks 2 from the apparatus for cutting. These conveyors can be any apparatus known to the state of the art, in particular belt conveyors or roller conveyors. Alternatively, the apparatus for cutting can be a separate apparatus with a loading station and a receiving station adapted for the manual delivery of book blocks 1 and the manual receiving of individual book blocks 2.

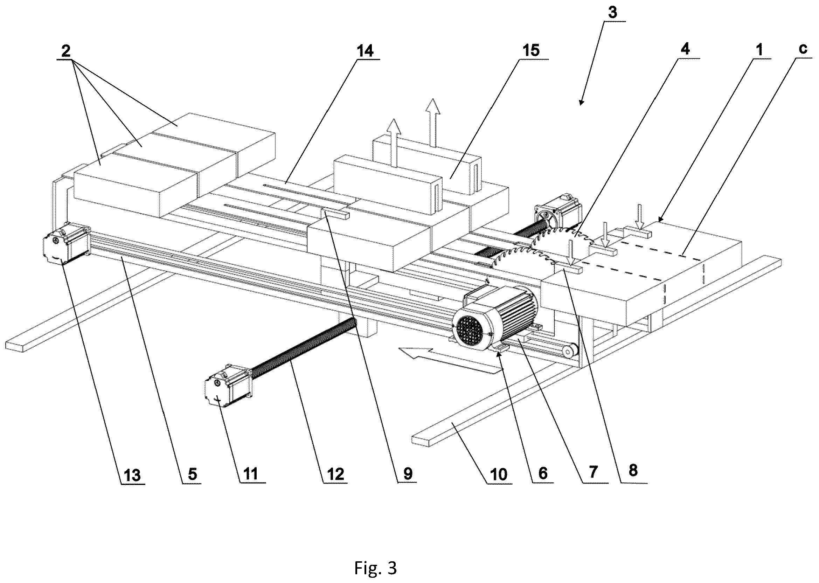

The apparatus for cutting book blocks 1 of lay-flat books into individual book blocks 2 includes at least one cutting unit 3 with a circular saw 4 (fig. 3). In the embodiment, book block 1 is cut into three individual book blocks 2 and the cutting apparatus contains two cutting units 3.

Each cutting unit 3 has one longitudinal guide 5 and a saw assembly 6. The single saw assembly 6 has a driven slider 7 slidably mounted on a longitudinal guide 5, which is adapted to a reciprocating movement along this longitudinal guide 5. Slide 7 has the loading grippers 8, circular saw 4, unloading grippers 9 attached in sequence.

In the embodiment, the first saw assembly 6 and the second saw assembly 6A can be distinguished. The first saw assembly 6 is the basic assembly and is designed for the basic cutting of book block 1 into a minimum number of individual book blocks 2, that is, into two individual book blocks 2. The first saw assembly 6 comprises a driven slider 7 slidably mounted along the longitudinal guide 5 and adapted to reciprocating movement along this longitudinal guide 5. A pair of loading grippers 8, a circular saw 4 and a pair of unloading grippers 9 are attached to the slider 7 in sequence. In each pair of loading grippers 8 and unloading grippers 9, individual grippers are arranged on either side of the circular saw 4.

Furthermore, the cutting unit 3 comprises support tables 14 supporting the book blocks 1 during the cutting operation and pressing beams 15 adapted to press the book block against the support table 14 during the cutting operation. The support tables 14 are mounted to the longitudinal guides 5 and have a slot for the circular saw 4. The support tables 14 associated with the longitudinal guides 5 can be relatively narrow and perform a lateral movement together with the longitudinal guide 5, and the circular saw 4 moves along them during cutting. Depending on the technological stage of the cutting process, the pressure beams 15 are either raised or lowered and press the book block 1 against the support table 14. The clamping of the book block 1 to the support table 14 protects the book block 1 from unintentional movement ensuring accuracy of the cut and is only carried out during cutting with the circular saw 4. In other stages of the process, the pressure beams 15 are raised.

Pairs of loading grippers 8 and unloading grippers 9 are also vertically movable in a direction perpendicular to the plane of the support table 14, so that they can be lowered below the book block 1 being cut during the cutting operation. Pairs of loading grippers 8 and unloading grippers 9 are used to grip first the book block 1 in the part corresponding to each individual book block 2 and, after the cutting operation, to grip each individual book block 2. The second saw assembly 6A has a construction analogous to the first saw assembly, but is an additional assembly intended for cutting book block 1 into further individual book blocks 2, as in the embodiment into three individual book blocks 2. Therefore, it has one loading gripper 8, a circular saw 4 and one unloading gripper 9. The loading gripper 8 and the unloading gripper 9 are located on one side of the circular saw 4 and serve to grip first the book block 1 in the part corresponding to the next single book block 2 and, after the cutting operation, to grip this cut-off book block 2. The individual loading grippers 8 and the unloading grippers 9 are also vertically movable in a direction perpendicular to the plane of the support table 14, so that they can be lowered below the book block 1 being cut during the cutting operation.

Cutting book block 1 into four individual book blocks 2 requires the introduction of another cutting unit 3 into the cutting machine, that is, a longitudinal guide 5 and a saw assembly.

The longitudinal guides 5 are driven and are slidably mounted on transverse guides 10 oriented transverse to the directions of reciprocating movement of the saw assembly 6, 6A and perpendicular to the longitudinal guides 5 themselves. The drive of the longitudinal guides 5 and their movement on the transverse guides 10 is carried out by a drive 11 coupled to a helical gearbox 12.

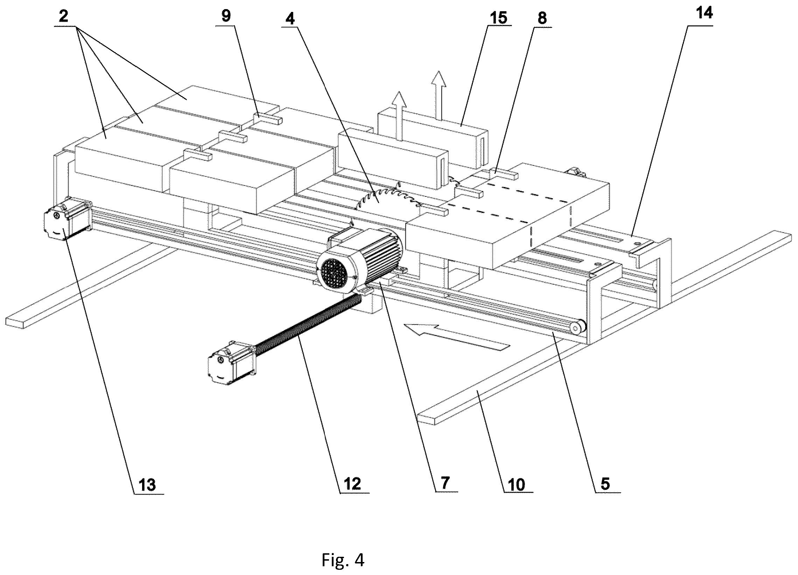

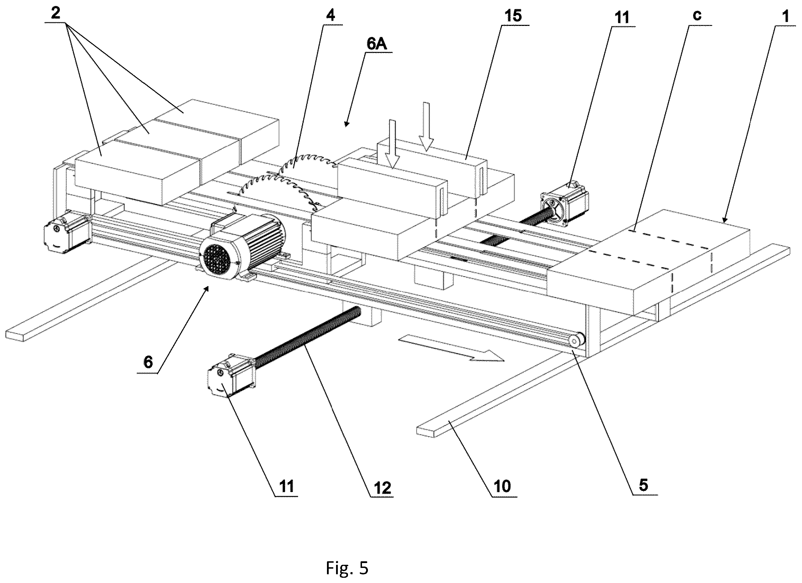

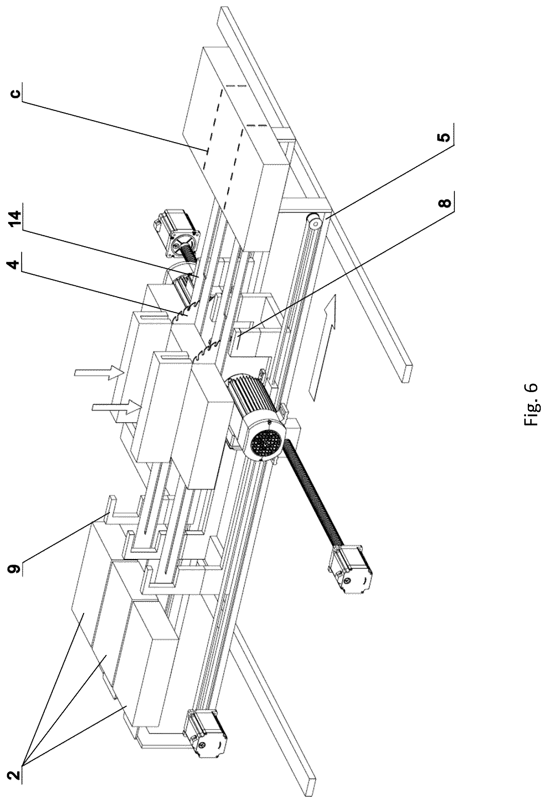

The reciprocating movement of each saw assembly 6, 6A along the longitudinal guides 5 is a process movement, and the following operations are carried out during one complete movement cycle of this saw assembly 6, 6A:
- positioning of book block 1 (fig. 3) prior to loading into the cutting unit 3 by using loading grippers 8 having an retaining element to fix the position of the book block 1. The single loading gripper 8 and unloading gripper 9 has a vertical support acting as retaining element and two jaws, upper and lower, which, moving along the vertical support, can clamp on the book block 1;
- gripping the book block 1 (fig. 4) with loading grippers 8 and loading them into the cutting position;
- simultaneous with loading of book block 1 (fig. 5), unloading individual book blocks 2 formed from a previously cut book block 1 in an earlier movement cycle;
- pushing outside the cutting unit 3 onto the output conveyor the individual book blocks 2 previously unloaded from the cutting unit 3;
- cutting with circular saw 4 (fig. 6) of the book block 1 in the cutting position with the simultaneous movement of the loading grippers 8 to the loading position of the next book block 1 and the unloading grippers 9 to the unloading position of the individual book blocks 2 from the book block 1 being cut.

The movement of each saw assembly 6, 6A along the longitudinal guides 5 is carried out by a single drive unit fitted with a stepper motor 13 and a strip transmission where the slider is secured to a fixed point on the strip. Other gears, such as chain, helical or rack- and-pinion gears, can also be used for this purpose.

The movement of the longitudinal guides 5 together with the slider 7 along the transverse guides 10 is the movement that allows the saw assembly 6 to be set. Adjustment of saw assembly 6 is necessary when changing the number of pieces, printed books in the width of book block 1, requiring the introduction of another cutting unit 3. On the other hand, when changing the format of the book blocks 2 or when changing the width of the book block 1, an adjustment of the saw assembly 6, 6A is required by changing its position in relation to the axis of the book block, thus changing the position of the saw assembly 6, 6A in the transverse direction. The setting of circular saw 4 must correspond to the planned cutting lines.

The space between the support tables 14 providing support for the book blocks 1 and then, after cutting, for the individual book blocks 2, especially for the production of book blocks 2 with considerable formats, can be made of thin steel flat bars connected according to the honeycomb principle or parallel bars suspended on horizontal bars, with springs in the spaces between the flat bars. In such embodiments, the apparatus for cutting is protected against the risk of individual book blocks 2 sliding into the apparatus.

During the process movement of the saw assembly 6, the loading grippers 8 and the unloading grippers 9 assume the following positions:
- the raised open position of the loading gripper 8 and the unloading gripper 9, in which the loading gripper 8 and the unloading gripper 9 are raised above the support table 14 and their lower jaws are in a position slightly below the surface of the support table 14: from -1 to -3mm, and the upper jaws are maximally open. In this position, positioning is carried out and leaving book block 1 loaded into the cutting position, and pushing out the individual book blocks 2 formed from the cut book block 1,
- the closed raised position of the loading gripper 8 and the unloading gripper 9, in which the loading gripper 8 and the unloading gripper 9 are raised above the support table 14, their lower jaws being in a position slightly above the surface of the support table 14 from +0.5 to +3mm, and their upper jaws clamping the book block 1. In this position, the loading of book block 1 and the unloading of individual book blocks 2 are performed,
- the lowered closed position of the loading clamp 8 and the unloading clamp 9, in which the loading clamp 8 and the unloading clamp 9 are lowered below the support table 14. In this position, a cut is made with the circular saw 4, during which the loading gripper 8 and the unloading gripper 9 located under the supporting table 14 pass the material being cut on the table - the book block 1.

When changing the printed books in the width of book block 1, the cutting apparatus can include any suitable number of cutting units 3 with saw assemblies 6. In particular, it can be:
- one cutting unit 3 for book blocks 1 cut into two individual book blocks 2,
- two cutting units 3 for book blocks 1 cut into three individual book blocks 2,
- three cutting units 3 for book blocks 1 cut into four individual book blocks 2, etc.

Adjustment changes of cutting unit 3 with saw units 6, 6A can be carried out automatically, without stopping other printing processes; moving cutting units 3 is sufficient for this. For example, when changing the number of books printed on a book block from three to two, where the cutting operation was performed with two cutting units 3 and book blocks 1 were cut into two single book blocks 2, bringing one cutting unit 3 to the side of the machine beyond the width of book block 1 and positioning the basic saw assembly 6 in the middle of book block 1 in the cutting line C achieves the cutting of book blocks 1 into two single book blocks 2. The displacement of one cutting unit 3 to the side of the machine is realised by moving the longitudinal guide 5 on the transverse guide 10.

The control of the individual units and the apparatuses that make them up and their adjustment to the number of cuts by the circular saws 4 and their position in the width of the book block 1 is carried out by optical sensors reading the control marks printed on the book block on the margin to be trimmed in the further stages of the bookbinding process.

## Claims

1. An apparatus for cutting lay-flat book blocks, comprising a cutting unit (3) with a circular saw (4), **characterized in that** the cutting unit (3) comprises at least one longitudinal guide (5) and at least one saw assembly (6), whereby the single saw assembly (6) has a driven slider (7) slidably mounted on the longitudinal guide (5) and adapted for reciprocating movement along said longitudinal guide (5) and has loading grippers (8), circular saw (4), unloading grippers (9) fixed in sequence, wherein the longitudinal guide (5) has a support table (14) comprising a slot for the circular saw (4) and adapted to support the book blocks (1) being cut, wherein the loading grippers (8) and the unloading grippers (9) are slidably fixed in a vertical direction perpendicular to the plane of the support table (14).

2. The apparatus for cutting lay-flat book blocks according to claim 1, **characterized in that** the single saw assembly (6) comprises a pair of loading grippers (8) and a pair of unloading grippers (9), the loading grippers (8) in the pair of loading grippers (8) and the unloading grippers (9) in the pair of unloading grippers (9) being arranged on both sides of the circular saw (4).

3. The apparatus for cutting lay-flat book blocks according to claim 1 or 2, **characterized in that** it comprises at least two saw assemblies (6, 6A), the first saw assembly (6) having a pair of loading grippers (8) and a pair of unloading grippers (9), the loading grippers (8) in the pair of loading grippers (8) and the unloading grippers (9) in the pair of unloading grippers (9) being arranged on both sides of the circular saw (4), and each subsequent saw assembly (6, 6A) has single loading grippers (8) and single unloading grippers (9) arranged on a selected side of the circular saw (4).

4. The apparatus for cutting lay-flat book blocks according to any of the claims from 1 to 3, **characterized in that** the longitudinal guides (5) are slidably mounted on the transverse guides (10) oriented perpendicularly to these longitudinal guides (5) and are provided with a drive (11) implementing a reciprocating movement of the longitudinal guides (5) along the transverse guides (10).

5. The apparatus for cutting lay-flat book blocks according to any of the claims from 1 to 4, **characterized in that** the support tables (14) have a fixed position along the length of the longitudinal guides (5).

6. The apparatus for cutting lay-flat book blocks according to claim 5, **characterized in that** it comprises at least two longitudinal guides (5) with support tables (14), and between the support tables (14) a support structure adapted to support the book blocks being cut is mounted.

7. The apparatus for cutting lay-flat book blocks according to claim 6, **characterized in that** the support structure is made of flat bars fixed to the support tables (14).

8. The apparatus for cutting lay-flat book blocks according to any of the claims from 1 to 7, **characterized in that** it comprises pressure beams (15) adapted to press the book blocks (1) being cut against the support tables (14) during the cutting operation.

9. The apparatus for cutting lay-flat book blocks to any of claims from 1 to 8, **characterized in that** the single loading gripper (8) or unloading gripper (9) has a vertical bracket acting as a retaining element.
